(19) Europäisches Patentamt
European Patent Office
Office européen des brevets

(11) **EP 2 030 775 A1**

(12) **EUROPEAN PATENT APPLICATION**

(43) Date of publication:
**04.03.2009 Bulletin 2009/10**

(51) Int Cl.:
*B32B 5/18* (2006.01)   *B32B 3/14* (2006.01)
*B32B 27/30* (2006.01)   *E04F 15/10* (2006.01)
*D06N 7/00* (2006.01)

(21) Application number: **07024792.9**

(22) Date of filing: **20.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **28.08.2007 KR 20070086724**

(71) Applicant: **D&J Art Co Ltd**
**Jeju-si**
**Jeju-do (KR)**

(72) Inventors:
• **Kim, Duk-Soo**
  **Seoul (KR)**
• **Koh, Kwang-Hun**
  **Chungcheongnam-do (KR)**
• **Yuon, Chang-Bo**
  **Kuki-shi**
  **Saitama-ken (JP)**
• **Oh, Chul-Duk**
  **Tokyo-to (JP)**

(74) Representative: **Grünecker, Kinkeldey,**
**Stockmair & Schwanhäusser**
**Anwaltssozietät**
**Leopoldstrasse 4**
**80802 München (DE)**

(54)   **Method for manufacturing floor covering and floor covering manufacturing thereby**

(57)   A method for manufacturing a floor covering including forming a printing layer and a transparent film layer sequentially on a base layer made of polyvinyl chloride (PVC) as a main ingredient, forming a balance layer underneath the base layer, and forming a plurality of foam layers arranged in a row to be equally spaced apart from each other underneath the balance layer is disclosed.

The floor covering manufactured by the above has a slip-resistant effect on the floor of a building during the construction. Thus, the construction is carried out without an additional adhesive, and the use amount of the adhesive may be significantly reduced, if being used. Moreover, the floor covering can be replaced immediately without the finishing process, as well as, the recovered floor covering can be recycled since there is no damage thereon. Thus, an eco-friendly construction becomes possible.

Fig.3

EP 2 030 775 A1

**Description**

BACKGROUND OF THE INVENTION

Field of the Invention

The present invention relates to a method for manufacturing a floor covering having a slip-resistant effect and a floor covering manufactured thereby, and more particularly to a method for manufacturing a floor covering capable of reducing the use amount of an adhesive during a construction, easily removing and replacing the floor covering after the construction, as well as increasing a soundproofing and cushioning effect by increasing a friction force on a building construction to have a slip-resistant effect, and to a floor covering manufactured by the method.

Description of the Related Art

In general, a floor of a building construction requires various performances depending on the purposes of its use. Thus, in order to satisfy the requirement, a finishing material with a suitable texture for structural members of a floor and floor bases is selected and constructed with a suitable construction method.
On the ground or floor of a building, a floor covering such as a paper or a tile is constructed. Here, the floor covering such as a paper or a tile is lightweight and flexible, and use is made of one prepared by having vinyl chloride as a main ingredient with excellent cushioning and sound absorbing properties.
Such a floor covering made of vinyl chloride as a main ingredient comprises a base layer made of a PVC resin as a main ingredient, a printing layer formed on the base layer, and a transparent film layer formed on the printing layer. At this time, the floor covering may further comprise a coating layer, if necessary, formed on the transparent film layer for improving abrasion resistance and scratch resistance.
The base layer is consisting of a PVC resin as a main ingredient, a filler, and a plasticizer, and the transparent film layer is usually prepared only with a PVC resin and without a filler. Under circumstances, a balance layer is formed underneath the PVC base layer to prevent significant deterioration of flexural stability caused by a difference in a physical property, *i.e.,* shrinkage between the transparent film layer and the base layer to thereby manufacture the floor covering.
For example, Korean Patent Registration No. 10-0510836, which has been previously applied and registered by the present inventors, introduces a method for manufacturing a floor covering with improved flexural stability in consideration of a thickness and shrinkage between a balance layer and a transparent layer.

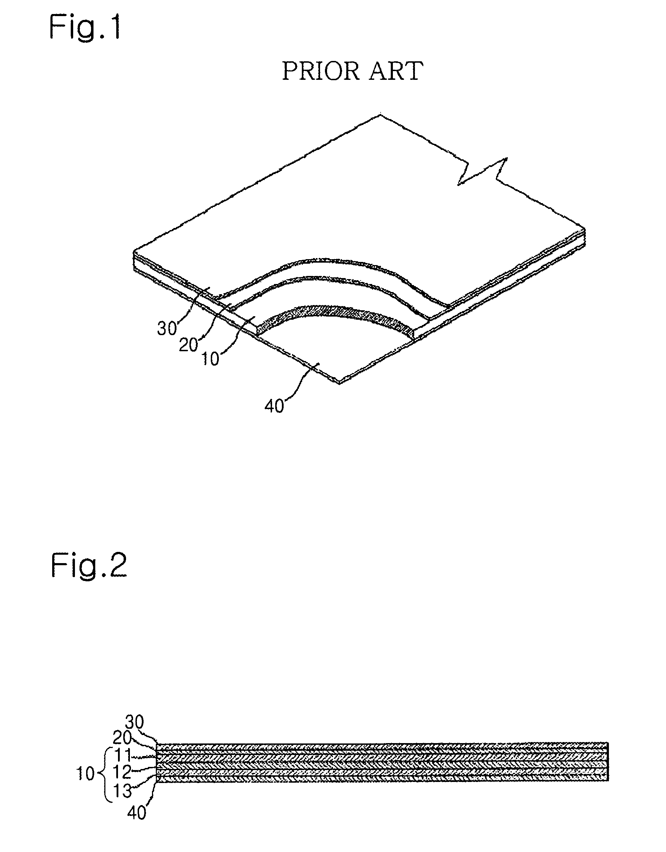

FIG. 1 is a partial incision perspective view of a floor covering according to a conventional embodiment, and FIG. 2 is a sectional view of FIG. 1. As shown in FIGs. 1 and 2, the conventional floor covering is manufactured by arranging a non-woven fabric layer 12 made of a sheeted glass fiber or rock wool between an upper PVC layer 11 and a lower PVC layer 13, followed by heat pressing them, to prepare a base layer 10, forming a printing layer 20 and a transparent film layer 30 made of a PVC resin sequentially on the base layer 10, and forming a balance layer 40 made of a PVC resin, a plasticizer and a filler underneath the base layer 10.
Thusly prepared conventional floor covering has equalized the stretchability of the upper transparent film layer and lower balance layer such that the floor covering has excellent flexural stability. As a result, its construction is easily carried out since there is no lifting of the floor covering during the construction, and deformation or distortion of the floor covering due to heat or humidity can be minimized.
The conventional floor covering is a finishing material of a building which requires various characteristics of waterproofing, soundproofing, shielding, toxicity, and odor, in addition to the flexural stability. Thus, improving methods on these characteristics have been studied in various ways.
Meanwhile, when finishing the floor of a building with the floor covering formed of the above-mentioned constituents, generally an excessive amount of an adhesive is applied on the building floor or underneath the floor covering followed by attaching it to the floor so as to maintain easy workability and strong adhesiveness even after the construction of the floor covering.
This is because the underneath of the floor covering is smooth. Thus, when the floor covering is used alone without an adhesive, the construction is not easy since the floor of a building is slippery. Even after the construction, the floor covering may be peeled off by an excessive force.
However, the construction of the floor covering with the excessive amount of an adhesive results in an increase of a construction fee in accordance with the use amount of the adhesive and use of unnecessary manpower. Moreover, the surface of a building, later on in the process of replacing and removing the obsolete floor covering, is damaged by the adhesive. Thus, there has been complications of carrying out the finishing process on the floor of a building again. Furthermore, the adhesive used in the construction process is usually an organic substance which generates various toxic gases during a fire. Thus, the use of the substance must be controlled.

SUMMARY OF THE INVENTION

Therefore, the present invention has been made in view of the above problems, and it is an object of the present invention to provide a method for manufacturing a floor covering capable of reducing the use amount of an adhesive during a construction, easily removing and replacing the floor covering after the construction without any damage of the building floor, as well as increasing a soundproof and cushion effect by increasing a friction force on a building construction to have a slip-resistant effect, and to a floor covering manufactured by the method.

In accordance with the present invention, the above and other objects can be accomplished by the provision of a method for manufacturing a floor covering having a slip-resistant effect, comprising forming a printing layer and a transparent film layer sequentially on a base layer made of polyvinyl chloride (PVC) as a main ingredient, and forming a balance layer underneath the base layer, and further comprising forming a plurality of foam layers, arranged in a row to be equally spaced apart from each other, underneath the balance layer.

The foam layer of the floor covering may be formed by mechanically foaming a mixed composition consisting of polyvinyl chloride (PVC) as a main ingredient, dioctylphthalate as a plasticizer, and calcium carbonate as a filler.

The balance layer of the floor covering is formed to satisfy the following equation 1 in relation with the transparent film layer.

[Equation 1]

$$B_t B_e = F_t F_e$$

wherein, $B_t$ is a thickness and $B_e$ is a shrinkage of the balance layer, and $F_t$ is a thickness and $F_e$ is a shrinkage of the transparent film layer.

In accordance with another aspect of the present invention, there is provided a floor covering, comprising a base layer made of polyvinyl chloride (PVC) resin as a main ingredient, a printing layer and a transparent layer sequentially formed on the base layer, a balance layer formed underneath the base layer, and a plurality of foam layers arranged in a row to be equally spaced apart from each other formed underneath the balance layer.

As apparent from the above description, the method for manufacturing a floor covering having a slip-resistant effect and the floor covering manufactured thereby has a slip-resistant effect on a floor of a building during the construction of the floor covering. Thus, it is possible to construct the floor covering without any additional adhesive and reduce the use amount of the adhesive, if being used. As a result, there can be effects of reducing the construction fee and time and preventing unnecessary manpower.

Moreover, since the present invention carries out the construction without an adhesive, there is no damage in the floor of a building by the adhesive. Thus, it is possible to replace the floor covering immediately without an additional finishing process, as well as, recycle the recovered floor covering since there is no damage thereon. As a result, the construction is eco-friendly and there can be another effect of solving the problems of giving serious harm to the building and humans with the generation of toxic gases due to the use of an organic adhesive during a fire.

Further, the floor covering has air filled between the foam layers in which the respective foam layer forms a single row. Therefore, a soundproofing effect between each layer due to a sound shielding effect by the air can be increased, and there can be yet another effect to greatly elevate the productivity of the floor covering by improving its cushioning property with the foam layers.

BRIEF DESCRIPTION OF THE DRAWINGS

The above and other objects, features and other advantages of the present invention will be more clearly understood from the following detailed description taken in conjunction with the accompanying drawings, in which:

FIG. 1 is a partial incision perspective view of a floor covering according to a conventional embodiment;
FIG. 2 is a sectional view of FIG. 1;
FIG. 3 is a bottom perspective view of a floor covering according to an embodiment of the present invention;
FIG. 4 is a sectional view of FIG. 3; and
FIG. 5 is a bottom perspective view of a floor covering according to another embodiment of the present invention.

DETAILED DESCRIPTION OF THE PREFERRED EMBODIMENTS

The present invention will be described in greater detail with reference to the accompanying drawings.

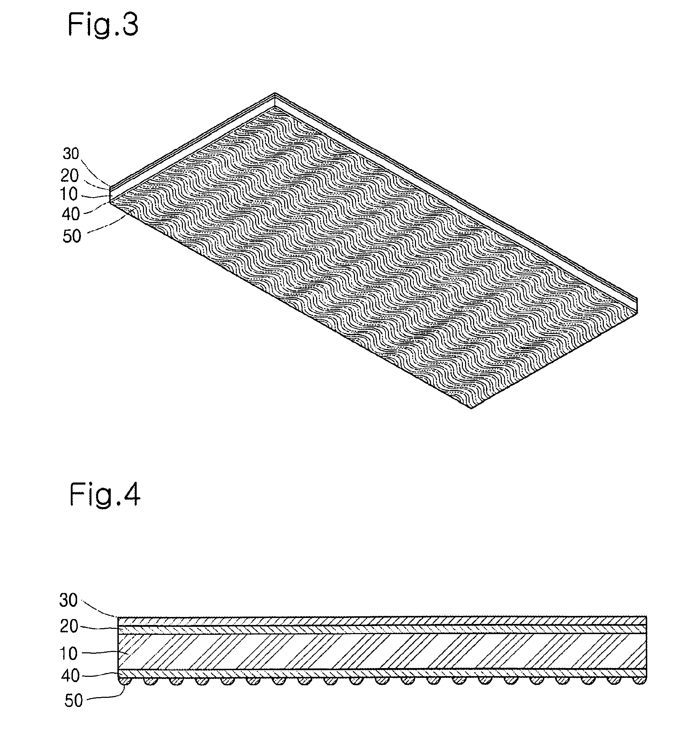

FIG. 3 is a bottom perspective view of a floor covering according to an embodiment of the present invention and FIG. 4 is a sectional view of FIG. 3. As shown in FIGs. 3 and 4, the floor covering of the present invention includes a base layer 10 made of a PVC resin, a printing layer 20 and a transparent film layer 30 sequentially formed on the base layer 10, and a balance layer 40 and a plurality of foam layers sequentially formed underneath the base layer 10.

According to the above constitution, the foam layer 50, which corresponds to a major constituent of the present invention, will be firstly described. The plurality of foam layers 50 are formed underneath the balance layer 40, that is, in the lowermost layer of the floor covering, arranged in a row to be uniformly spaced apart from each other. It is preferable that the foam layer 50 is made of the same substance used for the base layer 10 and the balance layer 40. More particularly, the foam layer 50 is formed to have a predetermined shape by mechanically foaming a mixed composition consisting of polyvinyl chloride (PVC) as a main ingredient, dioctylphthalate as a plasticizer, and calcium carbonate as a filler.

As described above, the foam layer 50 is not formed underneath the overall surface of the balance layer 40, but a plurality of the foam layers 50 are partially formed in a row to be uniformly spaced apart from each other. As a result of the foam layers 50, flexures are formed underneath the floor covering to increase a friction force such that the foam layers 50 serves an important role in preventing slip of the floor covering on the floor of a building.

Moreover, after constructing the floor covering, air is filled into a space between adjacent foam layers, in which the respective foam layer forms a row. Thus, the soundproofing effect between each layer due to the noise shielding effect by the air can be increased. In addition, the foam layers 50, by themselves, increase a cushion property of the floor covering, thereby greatly increasing the productivity.

Although the shape of the foam layer 50 is not particularly limited, it is preferable that the plurality of foam layers 50 are arranged in a curved row rather than a straight row. More preferably, it is preferable that the plurality of foam layers 50 are formed in a wave shape by the continuous curves. When forming the foam layers 50 in a wave shape, the surface area is increased such that significant improvement in the slip-resistant effect can be expected.

With the formation of the foam layer 50, the floor covering of the present invention has a slip-resistant effect on the floor of a building during the construction. Thus, the construction is carried out without an additional adhesive, and the use amount of the adhesive may be significantly reduced, if being used. As a result, the construction fee and time can be reduced.

Moreover, since the present invention carries out the construction without an adhesive, removing and replacing of the floor covering later on becomes easy. That is, since there is no damage in the floor of a building caused by the adhesive, it is possible to replace the floor covering immediately without the finishing process, as well as, recycle the recovered floor covering since there is no damage thereon. Thus, an eco-friendly construction becomes possible. Additionally, the problems of giving serious harm to the building and humans with the generation of toxic gases by the use of an organic adhesive in an excessive amount during a fire can be solved.

Meanwhile, the base layer 10 constituting the floor covering of the present invention is made of a PVC resin as a main ingredient, a filler and a plasticizer, and can be easily prepared by a well known method. A variety of additives may be further included in preparing the base layer 10, if necessary. Moreover, forming the printing layer 20 and the transparent film layer 30 on the base layer 10 can also be carried out by the application of a well known method. Particularly, the transparent film layer 30 is prepared using a PVC resin without adding a filler.

Forming the base layer 10, and the printing layer 20 and transparent film layer 30 on the base layer 10 can be easily carried out by a person with skills in the art.

Moreover, a coating layer (not shown) capable of protecting patterns formed on the transparent film layer 30 and printing layer 20 may be further formed on the transparent film layer 30, if necessary.

Meanwhile, inside the base layer 10, a non-woven fabric layer may be included. In this case, the PVC base layer can be easily obtained by arranging the non-woven fabric layer between the upper and lower PVC layers followed by heat-press molding. The non-woven fabric layer is formed to improve dimensional stability. Moreover, the non-woven fabric layer inhibits shrinking and stretching of the transparent and balance layers such that the edges of the floor covering during the construction may be smoothly finished, as well as inhibits deformation or distortion of the floor covering by heat or humidity.

The balance layer 40 is formed underneath the above-mentioned base layer 10. As described in Korean Patent Registration No. 10-0510836, which has been previously applied and registered by the present applicant (Dongshin Polymer Co., Ltd), it is preferable that the balance layer 40 is formed to satisfy the following equation 1 in relation with the transparent film layer 30.

[Equation 1]

$$B_t B_e = F_t F_e$$

wherein, $B_t$ is a thickness and $B_e$ is a shrinkage of the balance layer, and $F_t$ is a thickness and $F_e$ is a shrinkage of the transparent film layer.

Korean Patent Registration No. 10-0510836 has sufficiently described in that the flexure generation caused by a difference in the shrinkage of the materials constituting the transparent film layer 30 and the balance layer 40 can be inhibited by equalizing the shrinkage of the transparent film layer 30 and the balance layer 40, as can be seen in the equation 1.

The floor covering manufactured in the above manner that satisfies the equation 1 can inhibit the flexure generation occurred by a difference in the shrinkage of the conventional transparent film layer 30 and the balance layer 40. Thus, the edges can be smoothly engaged by preventing the lifting of the floor covering during the construction, as well as the deformation and distortion of the floor covering caused by heat or humidity can be effectively inhibited.

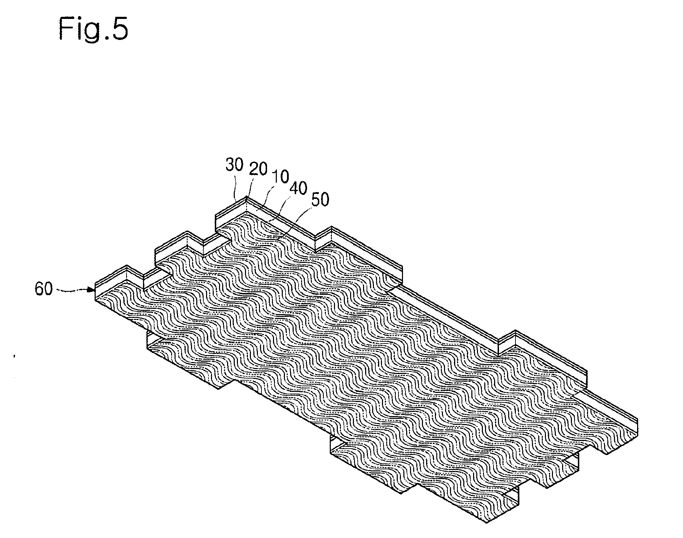

FIG. 5 is a bottom perspective view of a floor covering according to another embodiment of the present invention. As shown in FIG. 5, the floor covering of the present invention has engagement parts 60 formed at respective sides of the floor covering with a predetermined shape. The engagement parts 60 allow continuous arrangement of the floor coverings to be engaged at a protrusion/groove portion with another floor covering arranged adjacent to the floor covering at each side of the floor covering during the process of constructing the floor covering. Therefore, the engageability between each floor covering is improved, thereby increasing the overall solidity of the construction. Additionally, by outgrowing from the linearized arrangement of the floor coverings, an artistic taste in the design manner can be improved even in its appearance.

The present invention will be better understood from the following examples. These examples are not to be construed as limiting the scope of the invention.

Comparative Example 1

To 100 parts by weight of vinyl chloride with a degree of polymerization of 600 to 1200, 40 parts by weight of dioctylphthalate as a plasticizer and 380 parts by weight of calcium carbonate as a filler were mixed, and the mixture was rolled by a calender method to prepare a 2 mm-thick sheet, which was employed as a base layer. A printing layer printed by a typical gravure printing method was formed on the base layer, and a PVC sheet with a thickness of 0.2 mm and a horizontal shrinkage with heating (allow to set for 6 hours at 80°C) of 1.3% was laminated on the printing layer to form a transparent film layer. Thereafter, a sheet obtained by mixing 100 parts by weight of vinyl chloride with a degree of polymerization of 600 to 1200, 30 parts by weight of dioctylphthalate as a plasticizer, and 130 parts by weight of calcium carbonate as a filler followed by rolling the mixture with a calender method was adhered underneath the base layer to form a balance layer. As a result, a floor covering was manufactured.

Example 1

In the same manner as in Comparative Example 1 for manufacturing a floor covering, an additional process of forming a foam layer having a wave shape underneath the balance layer by mechanically foaming a resin composition mixed of 100 parts by weight of vinyl chloride with a degree of polymerization of 1200 to 1700, 120 parts by weight of dioctylphthalate as a plasticizer, and 10 parts by weight of calcium carbonate as a filler was performed to manufacture a floor covering.

Experimental Example 1

The floor coverings manufactured in Comparative Example 1 and Example 1 were placed on a support plate made of a cement mortar, respectively. The maximum tensile load (N) was measured by the resistance when the floor covering was pulled with a tensile load rate of 294 N/s and at an angle of 18°, while applying a vertical load of 294 N. The results are presented in Table 1.

Table 1

|  | Slip property (N) |
|---|---|
| Comparative Example 1 | 532 |
| Example 1 | 664 |

As can be seen from Table 1, in the case of Example 1 which forms a foam layer in the lowermost layer by the manufacturing method of the present invention, it was confirmed that the slip property improved due to its high friction force with respect to the cement mortar compared with the slip type Comparative Example 1.

Experimental Example 2

-Soundproof Test-

The floor coverings manufactured in Comparative Example 1 and Example 1, the weighted reduction in impact sound pressure level ($\Delta L_w$) was measured based on the test methods of KS F 2865, KS F 2863-1, KS F 2810-2, and KS F 2863-2 at Korea Noise & Vibration Technology Co., Ltd. The results are presented in Table 2.

Table 2

|  | $\Delta L_w$ |
|---|---|
| Comparative Example 1 | 6 |
| Example 1 | 8 |

As can be seed from Table 2, in the case of Example 1 which forms a foam layer in the lowermost layer by the manufacturing method of the present invention, the weighted reduction in impact sound pressure level increased compared with the slip type Comparative Example 1. It can be confirmed therefrom that the noise reduced significantly when passed through the floor covering of Example 1.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

**Claims**

1. A method for manufacturing a floor covering having a slip-resistant effect comprising:

   forming a printing layer and a transparent film layer sequentially on a base layer made of polyvinyl chloride (PVC) as a main ingredient; and forming a balance layer underneath the base layer, and further comprising:

forming a plurality of foam layers arranged in a row to be equally spaced apart from each other underneath the balance layer.

2. The method according to claim 1, wherein the foam layer is formed by mechanically foaming a mixed composition consisting of polyvinyl chloride (PVC) as a main ingredient, dioctylphthalate as a plasticizer, and calcium carbonate as a filler.

3. The method according to claim 2, wherein the balance layer is formed to satisfy the following equation 1 in relation with the transparent film layer.

[Equation 1]

$$B_t B_e = F_t F_e$$

wherein, $B_t$ is a thickness and $B_e$ is a shrinkage of the balance layer, and $F_t$ is a thickness and $F_e$ is a shrinkage of the transparent film layer.

4. A floor covering having a slip-resistant effect manufactured by any one of claims 1 to 3 comprising:

a base layer made of polyvinyl chloride (PVC) as a main ingredient;
a printing layer and a transparent layer sequentially formed on the base layer;
a balance layer formed underneath the base layer; and
a plurality of foam layers arranged in a row to be equally spaced apart from each other formed underneath the balance layer.

5. The floor covering according to claim 4, further comprising:

engagement parts formed at respective sides of the floor covering, to allow the floor covering to be engaged with another floor covering arranged adjacent to the floor covering at each side of the floor covering, each of the engagement parts comprising a protrusion/groove arrangement.

## Fig.1

PRIOR ART

## Fig.2

# Fig.3

30
20
10
40
50

# Fig.4

30
20
10
40
50

Fig.5

Europäisches
Patentamt

European
Patent Office

Office européen
des brevets

# EUROPEAN SEARCH REPORT

Application Number

EP 07 02 4792

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KR 2004 0095835 A (DONG SUIN POLYMER CO LTD) 16 November 2004 (2004-11-16) * abstract * ----- | 1-5 | INV. B32B5/18 B32B3/14 B32B27/30 E04F15/10 D06N7/00 |
| Y | EP 1 548 181 A (TAJIMA INC [JP]; SHINKOKASEI CO LTD [JP]) 29 June 2005 (2005-06-29) * claim 1 * * figure 1 * * paragraphs [0005], [0022] * ----- | 1-5 | |
| Y | DE 20 28 624 A1 (CENTRANS GMBH) 14 October 1971 (1971-10-14) * figures 1,2 * * page 5, paragraph 2 * * page 6, paragraph 1 * ----- | 1-5 | |
| Y | KR 2004 0065494 A (LG CHEMICAL LTD) 22 July 2004 (2004-07-22) * abstract * * figure 3 * ----- | 1-5 | |
| Y | GB 2 161 744 A (WARDLE STOREYS PLC) 22 January 1986 (1986-01-22) * page 1, lines 13-21 * ----- | 1-5 | TECHNICAL FIELDS SEARCHED (IPC) B32B E04F D06N |
| Y | EP 1 607 544 A (HEIMBACH GMBH & CO KG [DE]) 21 December 2005 (2005-12-21) * abstract * * figures * ----- | 1-5 | |
| Y | WO 94/15688 A (QPI CONSUMER PROD CORP [US]) 21 July 1994 (1994-07-21) * figure 1 * * abstract * ----- | 5 | |

The present search report has been drawn up for all claims

| Place of search | Date of completion of the search | Examiner |
|---|---|---|
| Munich | 13 November 2008 | Somerville, Fiona |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 07 02 4792

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2008

| Patent document cited in search report | | Publication date | Patent family member(s) | | Publication date |
|---|---|---|---|---|---|
| KR 20040095835 | A | 16-11-2004 | NONE | | |
| EP 1548181 | A | 29-06-2005 | AU | 2003264534 A1 | 08-04-2004 |
| | | | WO | 2004027142 A1 | 01-04-2004 |
| | | | JP | 4053391 B2 | 27-02-2008 |
| | | | JP | 2004107845 A | 08-04-2004 |
| | | | KR | 20050057322 A | 16-06-2005 |
| | | | US | 2006048464 A1 | 09-03-2006 |
| DE 2028624 | A1 | 14-10-1971 | NONE | | |
| KR 20040065494 | A | 22-07-2004 | CN | 1517503 A | 04-08-2004 |
| GB 2161744 | A | 22-01-1986 | NONE | | |
| EP 1607544 | A | 21-12-2005 | NONE | | |
| WO 9415688 | A | 21-07-1994 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

* KR 100510836